# FASCICULE DE BREVET EUROPEEN

(11) **EP 3 719 267 B1**
(45) Date de publication et mention de la délivrance du brevet: **19.04.2023**
(21) Numéro de dépôt: 20160185.3
(22) Date de dépôt: 28.02.2020
(51) Int. Cl.: F01D 25/18, F02C 7/32, F16H 57/04

(54) **GICLEUR POUR TURBOMACHINE COMPRENANT UNE TÊTE D'ÉJECTION À FACE OBLIQUE**
SPRÜHDÜSE FÜR TURBOTRIEBWERK, DIE EINE AUSSTOSSSPITZE MIT SCHRÄGER FLÄCHE UMFASST
NOZZLE FOR A TURBINE ENGINE COMPRISING AN EJECTION HEAD WITH OBLIQUE SURFACE

(30) Priorité: 01.04.2019 FR 1903449
(43) Date de publication de la demande: 07.10.2020
(73) Titulaire: Safran Transmission Systems, 92700 Colombes (FR)
(72) Inventeur: MOULY, Guillaume Pierre, 77550 MOISSY-CRAMAYEL (FR); CHEVALLIER, Michel, 77550 MOISSY-CRAMAYEL (FR); PICHARD, Laurent Pascal Diogène, 77550 MOISSY-CRAMAYEL (FR)
(74) Mandataire: Brevalex

(56) Documents cités:
- WO-A1-2019/016491
- CN-A- 106 594 248
- FR-A1- 3 026 135
- FR-A1- 3 036 441
- FR-A1- 3 042 570

## Description

### Domaine technique

L'invention concerne le domaine des dispositifs de lubrification du type gicleur pour lubrifier un accouplement par exemple à paliers ou à engrenages. Dans une application particulière de l'invention, l'accouplement est un couple d'engrenages coniques d'un système d'entraînement d'accessoires de turbomachine d'aéronef. D'autres applications peuvent être envisagées sur une turbomachine d'aéronef, par exemple la lubrification d'un engrenage ou d'un palier de guidage d'un arbre de la turbomachine.

L'invention peut également s'appliquer à d'autres types d'accouplements.

### État de la technique antérieure

Les documents FR 3 036 441 A1, FR 3 026 135 A1, CN106594248A et FR 2 949 246 A1 décrivent des gicleurs de lubrification de paliers de turbomachine d'aéronef.

Un gicleur conventionnel - notamment chacun des gicleurs décrits dans les documents précités - comprend un corps pourvu d'une tête d'éjection. Le corps du gicleur comprend un canal permettant d'acheminer un fluide de lubrification jusqu'à la tête d'éjection. L'éjection du fluide est réalisée par un ou plusieurs orifices agencés dans la tête d'éjection de manière à diriger ce fluide en direction de la pièce d'accouplement à lubrifier.

Un tel gicleur ne permet pas toujours de lubrifier correctement un accouplement de turbomachine, en particulier dans des phases de fonctionnement dans lesquelles le fluide est éjecté à faible vitesse, typiquement lors de la phase de démarrage de la turbomachine. Dans de telles conditions d'éjection, le fluide sortant du gicleur est principalement soumis à une force d'inertie telle que la gravité et tend ainsi à s'écouler verticalement ou plus généralement selon une direction inertielle correspondant à ladite force d'inertie. Or, les zones cibles de l'accouplement à lubrifier ne sont généralement pas situées dans la direction inertielle, le fluide pouvant ainsi tomber en-dehors de ces zones cibles.

Un but de l'invention est de proposer un dispositif de lubrification capable d'améliorer la lubrification d'un accouplement appartenant de préférence à une turbomachine ou à un système d'entraînement d'accessoires d'une turbomachine d'aéronef.

### Exposé de l'invention

A cet effet, l'invention a pour objet un dispositif de lubrification pour accouplement, comportant un corps pourvu à une extrémité longitudinale d'une tête d'éjection s'étendant le long d'un axe longitudinal, le corps comprenant une face circonférentielle et un canal principal apte à acheminer un fluide de lubrification jusqu'à la tête d'éjection, la tête d'éjection comportant un orifice d'éjection agencé pour éjecter le fluide de lubrification en provenance du canal principal, cet orifice d'éjection définissant une direction d'éjection et débouchant sur une face d'extrémité de la tête d'éjection, la face d'extrémité étant orientée par rapport à l'axe longitudinal de la tête d'éjection de sorte à guider le fluide de lubrification pour s'écouler vers la face circonférentielle jusqu'à une arête de décrochage délimitant en partie la face d'extrémité. Selon l'invention, le dispositif comprend des moyens de guidage du fluide de lubrification vers l'arête de décrochage.

Ce dispositif de lubrification peut typiquement former un gicleur.

Le fluide de lubrification peut être de l'huile ou tout autre fluide apte à lubrifier la pièce d'usure.

L'expression « accouplement », ou « pièce d'accouplement », désigne une pièce ou un mécanisme comprenant au moins une pièce en contact avec une autre pièce, ces deux pièces étant en mouvement l'une par rapport à l'autre générant ainsi un frottement. La lubrification de l'accouplement permet de réduire ce frottement. A titre d'exemple non limitatif, l'accouplement peut être un couple d'engrenages coniques appartenant à un système d'entraînement d'accessoires de turbomachine d'aéronef.

L'expression « arête » désigne un segment délimité par deux points distincts l'un de l'autre. Ce segment peut être rectiligne ou curviligne.

De préférence, l'orifice d'éjection peut être orienté selon ladite direction d'éjection par rapport à une direction inertielle le long de laquelle s'applique une force d'inertie agissant sur le fluide de lubrification, la face d'extrémité de la tête d'éjection pouvant être oblique par rapport audit axe longitudinal de la tête d'éjection et par rapport à ladite direction inertielle. Autrement dit, la face d'extrémité n'est dans ce cas ni perpendiculaire ni parallèle à l'axe longitudinal de la tête d'éjection, et elle n'est ni perpendiculaire ni parallèle à ladite direction inertielle. De plus, la face d'extrémité est dans ce cas configurée pour acheminer le fluide de lubrification s'écoulant sur celle-ci sous l'action de la force d'inertie jusqu'à ladite arête de décrochage.

La force d'inertie peut être la gravité. La force d'inertie peut être différente de la gravité, par exemple lorsque le dispositif est embarqué dans un aéronef en phase de vol.

Une telle géométrie de la tête d'éjection permet de positionner celle-ci verticalement au-dessus de l'accouplement à lubrifier, ou plus généralement au droit de l'accouplement à lubrifier selon ladite direction inertielle, de sorte que :
- la direction d'éjection soit dirigée vers une première zone cible de l'accouplement, permettant au fluide de lubrification éjecté par l'orifice d'éjection de former un jet apte à atteindre cette première zone cible lorsque la vitesse d'éjection est relativement élevée ;
- ladite face d'extrémité soit oblique par rapport à la direction de la gravité ou plus généralement par rapport à ladite direction inertielle, ou en tous cas non parallèle à celle-ci, et orientée de manière à diriger le fluide de lubrification vers une deuxième zone cible de l'accouplement lorsque la vitesse d'éjection est relativement faible ; la deuxième zone cible peut être identique ou différente de la première zone cible ;
- l'arête de décrochage soit située verticalement au-dessus de la deuxième zone cible ou, plus généralement, située au-dessus de la deuxième zone cible dans ladite direction inertielle de manière à orienter vers cette deuxième zone cible le fluide de lubrification s'écoulant sur la face d'extrémité et se décrochant de cette face d'extrémité au niveau de l'arête de décrochage.

De préférence, la face d'extrémité peut former un angle inférieur ou égal à 60° par rapport à la direction inertielle.

Une vitesse d'éjection est ici considérée comme étant relativement élevée lorsque, en sortie d'un orifice d'éjection, le fluide de lubrification est principalement soumis à une force d'éjection capable d'orienter l'écoulement de ce fluide le long de la direction d'éjection, au moins sur une distance suffisante pour permettre au fluide d'atteindre ladite première zone cible de l'accouplement. Typiquement, une telle force d'éjection peut être obtenue en introduisant au moins quatre ou cinq litres de fluide de lubrification par heure dans le dispositif. A contrario, la vitesse d'éjection est considérée comme étant relativement faible lorsque, en sortie de l'orifice d'éjection, le fluide de lubrification est principalement soumis à la force d'inertie et tend ainsi à s'écouler le long de la direction inertielle (c'est-à-dire verticalement lorsque la force d'inertie est la gravité).

L'invention permet donc de lubrifier efficacement un accouplement de turbomachine en maîtrisant la trajectoire du fluide de lubrification, à la fois dans des phases dans lesquelles la vitesse d'éjection est relativement élevée, par exemple en régime nominal, et dans des phases dans lesquelles la vitesse d'éjection de ce fluide est relativement faible, par exemple en phase de démarrage.

De préférence, le dispositif de lubrification peut comprendre des moyens de guidage du fluide de lubrification vers l'arête de décrochage.

Dans un mode de réalisation, la tête d'éjection peut comprendre une face biseautée formant un angle avec la face d'extrémité, lesdits moyens de guidage comprenant une arête formée par la jonction entre la face d'extrémité et la face biseautée.

Dans un mode de réalisation, le dispositif de lubrification peut comprendre au moins une cloison qui s'étend en saillie de la tête d'éjection de manière à délimiter la face d'extrémité.

Lesdits moyens de guidage peuvent comprendre cette au moins une cloison.

Dans un mode de réalisation, le dispositif de lubrification peut comprendre un premier et un deuxième orifice d'éjection qui sont chacun orientés selon une direction d'éjection différente et qui débouchent chacun sur une face d'extrémité respective de la tête d'éjection.

Ainsi, lorsque ce dispositif est prévu pour lubrifier simultanément plusieurs zones cible d'un ou de plusieurs accouplements, les avantages précités peuvent être obtenus à l'égard de chacune de ces zones cible.

Selon une variante, l'au moins une cloison peut former un écran configuré pour empêcher ou limiter une perturbation mutuelle de jets de fluide de lubrification provenant respectivement du premier et du deuxième orifice d'éjection.

Dans un mode de réalisation, la tête d'éjection peut comprendre un rebord entre la face d'extrémité et la face circonférentielle du corps, ce rebord étant configuré pour empêcher ou limiter l'écoulement du fluide de lubrification par capillarité sur cette face circonférentielle.

De préférence, ledit rebord peut former une portion de couronne ou une couronne rapportée sur la tête d'éjection.

L'invention concerne aussi un assemblage comprenant un accouplement et un dispositif de lubrification tel que décrit ci-dessus, dans lequel l'orifice d'éjection définissant la direction d'éjection peut être orienté vers une première zone cible de l'accouplement à lubrifier et l'arête de décrochage peut être située verticalement au droit d'une deuxième zone cible de l'accouplement à lubrifier.

Plus généralement, dans l'assemblage de l'invention, l'arête de décrochage est située au droit d'une zone cible de l'accouplement à lubrifier, en particulier selon ladite direction inertielle.

L'invention concerne aussi un système d'entraînement d'accessoires pour turbomachine d'aéronef comprenant un tel assemblage ou un tel dispositif de lubrification, une turbomachine comprenant un tel assemblage ou un tel système d'entraînement d'accessoires ou un tel dispositif de lubrification, ainsi qu'un ensemble propulsif d'aéronef comprenant une telle turbomachine.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un système d'entraînement d'accessoires pour turbomachine d'aéronef, comprenant un renvoi d'angle à engrenages coniques ;
[Fig. 2] est une vue schématique en perspective d'un couple d'engrenages coniques et d'un gicleur selon l'invention ;
[Fig. 3] est une vue schématique en perspective d'un gicleur ;
[Fig. 4] est une vue schématique en coupe axiale du gicleur de la figure 3 ;
[Fig. 5] est une vue schématique en perspective d'un gicleur ;
[Fig. 6] est une vue schématique en perspective d'une roue dentée et d'un gicleur selon l'invention ;
[Fig. 7] est une vue schématique en perspective du gicleur de la figure 6 ;
[Fig. 8] est une vue schématique en coupe axiale du gicleur de la figure 6 ;
[Fig. 9] est une vue schématique en perspective d'un gicleur selon l'invention ;
[Fig. 10] est une vue schématique en perspective d'un gicleur selon l'invention, comprenant un rebord prévu pour empêcher une remontée de fluide de lubrification le long de la paroi extérieure du gicleur.

### Description détaillée de modes de réalisation

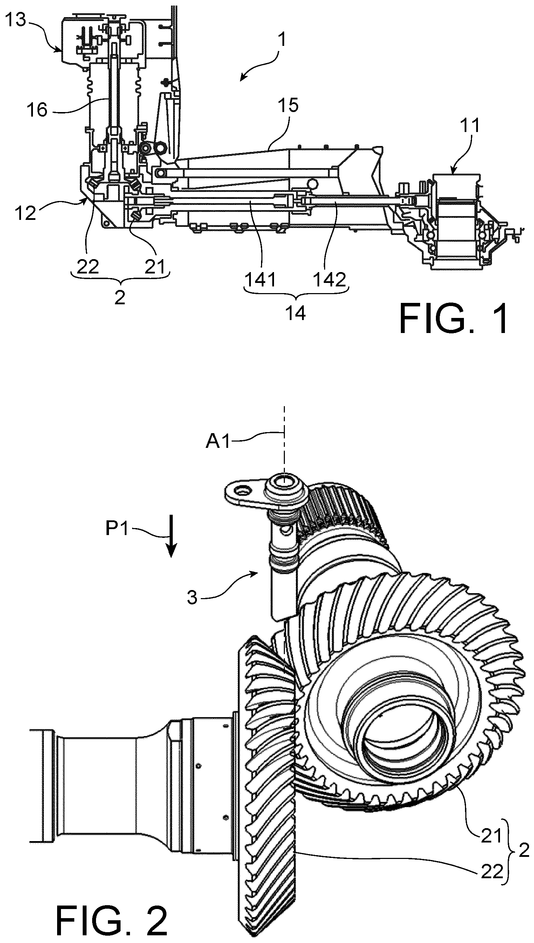

La figure 1 représente un système d'entraînement d'accessoires 1, également connu sous la dénomination « Accessory Drive Train » (ADT), pour turbomachine d'aéronef telle qu'un turboréacteur à double flux et à double corps.

De manière connue, une partie de l'énergie générée par le turboréacteur est prélevée pour alimenter différents accessoires alimentant ce turboréacteur ainsi que des équipements de l'aéronef.

Ce prélèvement s'effectue généralement mécaniquement sur un arbre de corps haute pression (non représenté) du turboréacteur. Pour ce faire, le système d'entraînement d'accessoires 1 comporte typiquement plusieurs boîtiers 11, 12 et 13 reliés les uns aux autres de manière à transmettre auxdits accessoires et équipements l'énergie prélevée sur le turboréacteur.

Le boîtier 11 est un boîtier d'entraînement interne, comprenant un engrenage entraîné par un pignon solidaire de l'arbre de corps haute pression.

Le boîtier 12 est un boîtier de renvoi d'angle également connu sous la dénomination « Transfert Gear Box ». Ce boîtier de renvoi d'angle 12 est relié au boîtier d'entraînement interne 11 par un arbre 14 de transmission de mouvement rotatif. Cet arbre 14 s'étend à travers un bras 15 d'un carter intermédiaire du turboréacteur destiné à s'étendre au travers de la veine secondaire (non représentée) du turboréacteur. Dans cet exemple, l'arbre 14 est réalisé en deux portions 141 et 142.

Le boîtier 13 est un boîtier d'entraînement d'accessoires également connu sous la dénomination « Accessory Gear Box » (AGB). Ce boîtier d'entraînement d'accessoires 13 est relié au boîtier de renvoi d'angle 12 par un autre arbre 16 de transmission de mouvement rotatif. Cet arbre 16 s'étend typiquement parallèlement à l'axe longitudinal (non représenté) du turboréacteur. Le boîtier 13 entraîne et supporte habituellement différents accessoires, par exemple un générateur, un démarreur, un alternateur, une pompe hydraulique, un groupe de lubrification moteur, etc.

Ainsi, le système d'entraînement d'accessoires 1 de la figure 1 permet l'entraînement de tels accessoires par l'arbre de corps haute pression, via les boîtiers 11, 12 et 13, et les arbres 14 et 16.

En référence aux figures 1 et 2, le boîtier de renvoi d'angle 12 comprend un accouplement conique 2 comportant deux roues 21 et 22 engrenées de manière à transmettre le mouvement rotatif de l'arbre 14 à l'arbre 16.

L'invention se rapporte plus spécifiquement à un dispositif de lubrification 3 permettant de lubrifier un tel accouplement conique 2.

Dans les modes de réalisation des figures 2 à 10, le dispositif de lubrification 3 forme un gicleur comportant un corps longiligne s'étendant le long d'un axe longitudinal A1.

Le corps du gicleur 3 est pourvu, à une extrémité longitudinale aval, d'une tête d'éjection 32.

Dans ces exemples, la tête d'éjection 32 s'étend également le long de l'axe longitudinal A1. Dans un mode de réalisation non représenté, la tête d'éjection 32 peut s'étendre le long d'un axe différent de l'axe du corps.

La tête d'éjection 32 présente des caractéristiques structurelles, décrites ci-après, permettant d'améliorer la lubrification de l'accouplement conique 2, en particulier dans des phases de fonctionnement du turboréacteur dans lesquelles la vitesse d'éjection de fluide de lubrification est relativement faible.

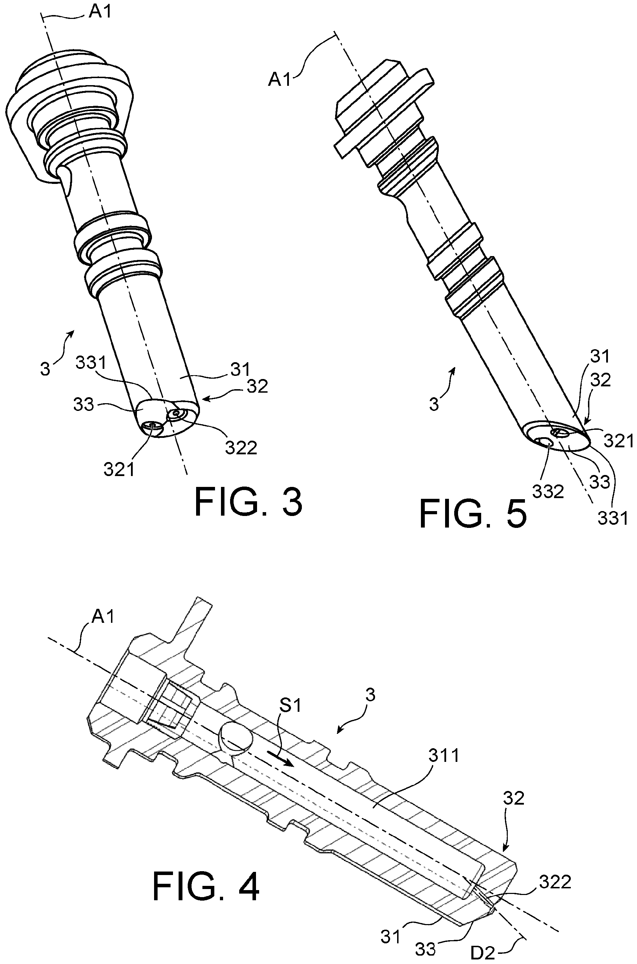

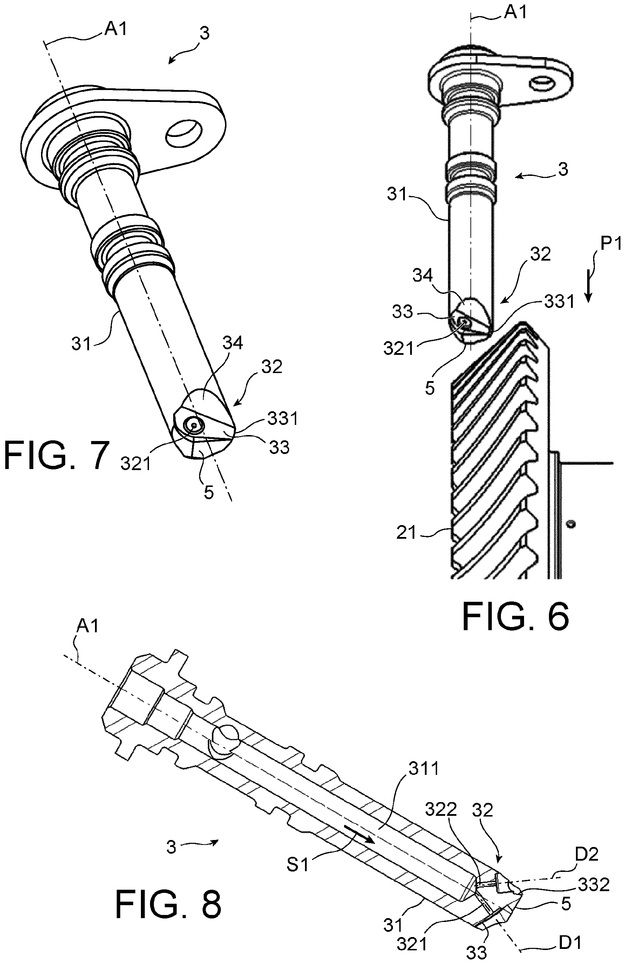

Le corps du gicleur 3 comprend un canal principal 311 visible aux figures 4 et 8. Ce canal principal 311 s'étend le long de l'axe longitudinal A1 et débouche à l'extérieur du gicleur 3 à une extrémité longitudinale amont de celui-ci, c'est-à-dire à l'extrémité opposée à la tête d'éjection 32. Ce canal principal 311 forme ainsi, à l'extrémité amont du gicleur 3, une entrée de fluide de lubrification.

Les termes « amont » et « aval » sont définis relativement à un sens d'écoulement S1 d'un fluide de lubrification à travers ce gicleur 3 (voir figure 4 et 8).

Typiquement, le fluide de lubrification est de l'huile.

Le canal principal 311 permet d'acheminer un tel fluide de lubrification depuis l'entrée du gicleur 3 jusqu'à la tête d'éjection 32.

Afin d'éjecter le fluide de lubrification en provenance du canal principal 311, la tête d'éjection 32 comporte un ou plusieurs orifices d'éjection 321, 322 orientés chacun selon une direction d'éjection D1, D2 respective (voir figures 4 et 8).

La direction d'éjection d'un orifice ainsi que les dimensions de cet orifice sont déterminées de sorte que, en fonctionnement nominal, c'est-à-dire à vitesse d'éjection du fluide de lubrification relativement élevée, le fluide éjecté forme un jet apte à atteindre une première zone cible de l'accouplement 2.

Généralement, le diamètre des orifices d'éjection est inférieur au diamètre du canal principal 311 afin de former un jet relativement précis.

En outre, la direction d'éjection de ces orifices n'est en général pas parallèle à l'axe longitudinal A1, en particulier lorsque la tête d'éjection 32 comprend plusieurs orifices d'éjection. Dans ce cas en effet, les orifices d'éjection doivent généralement permettre de diriger des jets de fluide de lubrification respectifs vers des zones cibles distinctes. De plus, l'environnement de l'accouplement 2, par exemple le volume disponible dans le boîtier 12, peut contraindre la disposition du gicleur 3, et notamment son orientation, relativement auxdites zones cibles.

L'invention se rapporte plus particulièrement à l'orientation relative d'une face d'extrémité 33 de la tête d'éjection 32 sur laquelle débouche un orifice d'éjection 321.

Dans chacun des modes de réalisation ici décrits, la tête d'éjection 32 comporte au moins un orifice d'éjection 321 débouchant sur une face d'extrémité 33 de la tête d'éjection 32.

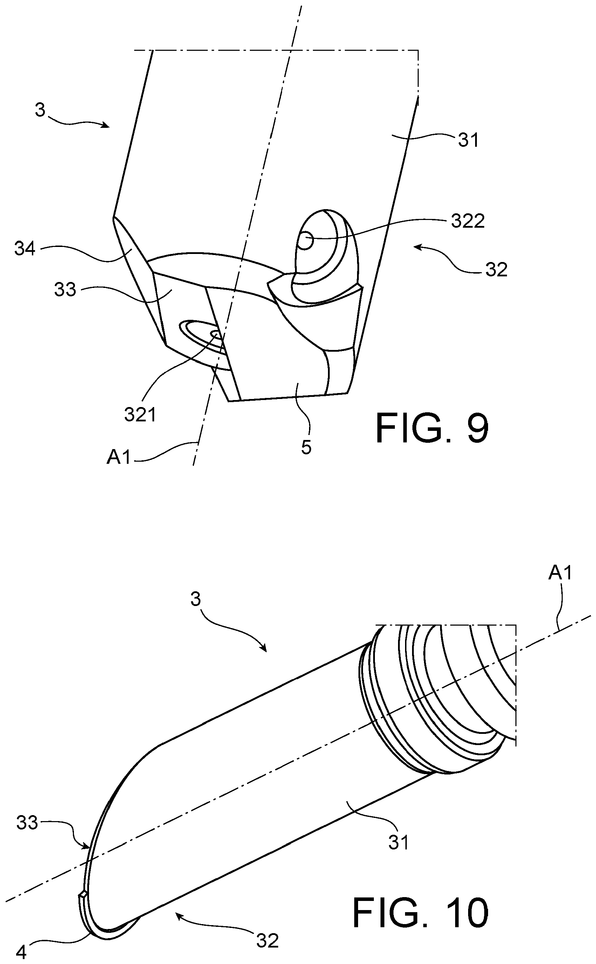

L'orifice d'éjection 321 peut déboucher sur la face d'extrémité 33 directement ou par l'intermédiaire d'une rainure réalisée dans la tête d'éjection 32 (voir par exemple la figure 9).

Dans le mode de réalisation de la figure 5, chacun des orifices d'éjection 321 et 322 débouche sur la même face d'extrémité 33.

Dans chacun des modes de réalisation ici décrits, la face d'extrémité 33 est oblique d'une part par rapport à l'axe longitudinal A1 et d'autre part par rapport à une direction inertielle le long de laquelle s'applique une force d'inertie agissant sur le fluide de lubrification.

Dans la description qui suit, la force d'inertie est la gravité de sorte que la direction inertielle considérée est verticale.

Compte tenu d'une telle oblicité de la face d'extrémité 33, le fluide de lubrification sortant de l'orifice d'éjection 321 à vitesse relativement faible s'écoule sur cette face d'extrémité 33 sous l'action de la gravité jusqu'à une extrémité de cette face qui est verticalement la plus basse.

En référence aux figures 6 et 7, cette extrémité est constituée par une arête 331 délimitant en partie la face d'extrémité 33 et, plus spécifiquement, délimitant dans cet exemple la face d'extrémité 33 et une face circonférentielle 31 externe de la tête d'éjection 32.

Le fluide de lubrification s'écoulant sur la face d'extrémité 33 sous l'action de la gravité est ainsi acheminé jusqu'à cette arête 331 où il se désolidarise du gicleur 3 compte tenu de la saillie anguleuse formée par cette arête 331. Pour cette raison, l'arête 331 est appelée « arête de décrochage ».

Ainsi, l'oblicité de la face d'extrémité 33 permet de diriger le fluide de lubrification sortant de l'orifice 321 vers une zone cible de l'accouplement conique 2 lorsque la vitesse d'éjection est relativement faible, cela de manière suffisamment précise pour obtenir une lubrification maîtrisée de l'accouplement conique 2.

La direction d'éjection d'un orifice de la tête d'éjection 32 est généralement agencée de sorte que, lorsque le fluide est éjecté de cet orifice à vitesse relativement élevée, le jet qu'il produit atteigne ladite première zone cible de l'accouplement 2 à lubrifier. La réalisation en oblique de la face d'extrémité 33 n'entrave pas un tel jet qui peut ainsi atteindre cette première zone cible lorsque la vitesse d'éjection est relativement élevée.

Lorsque le fluide est éjecté de l'orifice 321 à vitesse relativement faible, la face d'extrémité oblique 33 peut être orientée de sorte que, sous l'effet de la gravité, le fluide ainsi éjecté :
- s'écoule le long de cette face d'extrémité 33 pour atteindre l'arête de décrochage 331 située verticalement le plus bas par rapport aux autres parties de la face 33,
- se détache de la tête d'éjection 32 au niveau de cette arête de décrochage 331,
- puis tombe sous l'effet de la gravité en direction d'une deuxième zone cible de l'accouplement conique 2.

En fonction de l'orientation de la direction de l'orifice 321 par rapport à la face d'extrémité 33, la première et la deuxième zone cible peuvent être identiques ou différentes l'une de l'autre.

On notera à cet effet que l'oblicité de la face d'extrémité 33 par rapport à la direction D1 d'un orifice d'éjection 321 débouchant sur cette face 33 permet, en tant que telle, d'orienter le fluide de lubrification vers une même zone cible d'une part lorsque ce fluide est éjecté de cet orifice 321 à vitesse relativement élevée et d'autre part lorsqu'il en est éjecté à vitesse relativement faible.

En référence à l'assemblage de la figure 6, la tête d'éjection 32 du gicleur 3 est située verticalement au-dessus de la roue dentée 21, et le gicleur 3 est disposé de sorte que la face d'extrémité 33 soit oblique par rapport à la direction le long de laquelle s'exerce la gravité P1.

La direction d'éjection D1 de l'orifice 321 est orientée de manière à diriger le fluide de lubrification vers une première zone cible non représentée de l'accouplement lorsque le fluide est éjecté à vitesse relativement élevée.

La face d'extrémité 33 est quant à elle orientée, relativement à la roue dentée 21, de manière à diriger le fluide de lubrification vers une deuxième zone cible située sur cette roue 21 lorsque, en sortie de l'orifice d'éjection 321, ce fluide est principalement soumis à la gravité. Ainsi, dans l'exemple de la figure 6, lorsque le fluide sort de l'orifice d'éjection 321 à vitesse relativement faible, ce fluide s'écoule sous l'effet de la gravité sur la face d'extrémité 33-sur la figure 6, de la gauche vers la droite et de haut en bas-jusqu'à l'arête de décrochage 331 qui est située verticalement le plus bas par rapport aux autres parties de la face 33 - en l'occurrence en bas à droite de la figure 6. Au niveau de cette arête de décrochage 331, le fluide se détache de la tête d'éjection 32 pour tomber sur ladite deuxième zone cible située sur la roue dentée 21.

Ce détachement peut être favorisé en équipant une telle arête d'un élément saillant formant par exemple un rebord 4 tel qu'illustré à la figure 10.

Un tel rebord 10 peut aussi permettre d'empêcher qu'une partie du fluide de lubrification parvenant à l'extrémité verticalement inférieure 331 de la face d'extrémité 33 ne remonte par capillarité de long de ladite face circonférentielle 31 externe de la tête d'éjection 32, ou plus généralement le long d'une face externe de la tête d'éjection 32 et/ou du corps qui est adjacente à la face d'extrémité 33.

Ainsi, de manière plus générale, la tête d'éjection 32 peut être équipée ou fabriquée de manière à réaliser un rebord entre la face d'extrémité 33 et une telle face externe.

Dans l'exemple de la figure 10, le rebord 4 forme une portion de couronne ou d'anneau rapportée sur l'arête délimitant la face d'extrémité 33 et la face circonférentielle 31 externe de la tête d'éjection 32. Dans un mode de réalisation non représenté, ce rebord peut former une couronne rapportée sur tout le pourtour de la tête d'éjection 32, c'est-à-dire dans une configuration telle que celle de la figure 10, sur l'arête délimitant circonférentiellement la face d'extrémité oblique 33 et la face circonférentielle 31 externe de la tête d'éjection 32.

La face d'extrémité oblique 33 peut s'étendre radialement sur l'ensemble de la tête d'éjection 32, comme dans les exemples des figures 5 et 10, ou sur une portion seulement de la tête d'éjection 32, comme dans les exemples des figures 2 à 4, et 6 à 9.

Par ailleurs, la tête d'éjection 32 peut comprendre une pluralité de faces délimitant différentes zones fonctionnelles et/ou une ou plusieurs autres parties saillantes délimitant la face d'extrémité 33 et une ou plusieurs faces adjacentes à cette face d'extrémité 33.

Par exemple, le gicleur 3 des figures 6 à 8 comprend une partie saillante 5 formant un écran entre la face d'extrémité 33 sur laquelle débouche l'orifice d'éjection 321 et une autre face sur laquelle débouche l'orifice d'éjection 322. Un tel écran 5 permet d'empêcher ou du moins de limiter une perturbation mutuelle de jets de fluide de lubrification provenant de ces orifices 321 et 322, notamment lorsque le fluide est éjecté à vitesse relativement faible.

Le gicleur 3 de la figure 9 comprend aussi un écran 5 entre la face d'extrémité 33 sur laquelle débouche l'orifice d'éjection 321 et une autre face sur laquelle débouche l'orifice d'éjection 322.

La partie saillante 5 délimite dans ces exemples la face d'extrémité 33 en formant des moyens de guidage du fluide de lubrification vers l'arête de décrochage 331.

La tête d'éjection 32 des figures 6 à 9 comprend en outre une face biseautée 34 formant un angle avec la face d'extrémité 33. Autrement dit, la face d'extrémité 33 et la face biseautée 34 sont situées dans des plans respectifs dont la jonction forme une arête, laquelle constitue aussi des moyens de guidage du fluide de lubrification vers l'arête de décrochage 331.

Bien entendu, les modes de réalisation décrits ci-dessus ne sont nullement limitatifs. En particulier, le dispositif de lubrification 3 peut être utilisé pour lubrifier un accouplement autre qu'un pignon de couple conique 2 d'un système d'entraînement d'accessoires 1. Par exemple, l'accouplement peut être un palier de moteur.

## Revendications

1. Dispositif de lubrification (3) pour accouplement (2), comportant un corps pourvu à une extrémité longitudinale d'une tête d'éjection (32) s'étendant le long d'un axe longitudinal (A1), le corps comprenant une face circonférentielle (31) et un canal principal (311) apte à acheminer un fluide de lubrification jusqu'à la tête d'éjection (32), la tête d'éjection (32) comportant un orifice d'éjection (321) agencé pour éjecter le fluide de lubrification en provenance du canal principal (311), cet orifice d'éjection (321) définissant une direction d'éjection (D1) et débouchant sur une face d'extrémité (33) de la tête d'éjection (32), la face d'extrémité (33) étant orientée par rapport à l'axe longitudinal (A1) de la tête d'éjection (32) de sorte à guider le fluide de lubrification pour s'écouler vers la face circonférentielle (31) jusqu'à une arête de décrochage (331) délimitant en partie la face d'extrémité (33), **caractérisé en ce qu'**il comprend des moyens de guidage (34, 5) du fluide de lubrification vers l'arête de décrochage (331).

2. Dispositif de lubrification (3) selon la revendication 1, dans lequel la tête d'éjection (32) comprend une face biseautée (34) formant un angle avec la face d'extrémité (33), lesdits moyens de guidage comprenant une arête formée à la jonction entre la face d'extrémité (33) et la face biseautée (34).

3. Dispositif de lubrification (3) selon la revendication 1 ou 2, comprenant au moins une cloison (5) qui s'étend en saillie de la tête d'éjection (32) de manière à délimiter la face d'extrémité (33).

4. Dispositif de lubrification (3) selon la revendication 3, dans lequel lesdits moyens de guidage comprennent l'au moins une cloison (5).

5. Dispositif de lubrification (3) selon l'une quelconque des revendications 1 à 4, comprenant un premier (321) et un deuxième orifice d'éjection (322) qui sont chacun orientés selon une direction d'éjection (D1, D2) différente et qui débouchent chacun sur une face d'extrémité respective de la tête d'éjection (32).

6. Dispositif de lubrification (3) selon la revendication 5 incluant les caractéristiques de la revendication 3, dans lequel la cloison forme un écran configuré pour empêcher ou limiter une perturbation mutuelle de jets de fluide de lubrification provenant respectivement du premier (321) et du deuxième orifice d'éjection (322).

7. Dispositif de lubrification (3) selon l'une quelconque des revendications 1 à 6, dans lequel la tête d'éjection (32) comprend un rebord (4) entre la face d'extrémité (33) et la face circonférentielle (31) du corps, ce rebord étant configuré pour empêcher ou limiter l'écoulement du fluide de lubrification par capillarité sur cette face circonférentielle.

8. Assemblage comprenant un accouplement (2) et un dispositif de lubrification (3) selon l'une quelconque des revendications 1 à 7, l'orifice d'éjection (321) définissant la direction d'éjection (D1) étant orienté vers une première zone cible de l'accouplement (2) à lubrifier et l'arête de décrochage (331) étant située verticalement au droit d'une deuxième zone cible de l'accouplement (2) à lubrifier.

9. Turbomachine ou système d'entraînement d'accessoires (1) pour turbomachine d'aéronef, comprenant un dispositif de lubrification (3) selon l'une quelconque des revendications 1 à 7 ou un assemblage selon la revendication 8.

## Patentansprüche

1. Schmiervorrichtung (3) für eine Kupplung (2), umfassend einen Körper, der an einem Längsende eines Ausstoßkopfes (32) vorgesehen ist, der sich entlang einer Längsachse (A1) erstreckt, wobei der Körper eine Umfangsfläche (31) und einen Hauptkanal (311) aufweist, die ausgelegt sind, ein Schmierfluid zu dem Ausstoßkopf (32) zu transportieren, wobei der Ausstoßkopf (32) eine Ausstoßöffnung (321) umfasst, die so angeordnet ist, dass sie das aus dem Hauptkanal (311) kommende Schmierfluid ausstößt, wobei diese Ausstoßöffnung (321) eine Ausstoßrichtung (D1) definiert und an einer Endfläche (33) des Ausstoßkopfes (32) mündet, wobei die Endfläche (33) im Verhältnis zur Längsachse (A1) des Ausstoßkopfes (32) derart orientiert ist, das Schmierfluid so zu leiten, dass es in Richtung der Umfangsfläche (31) bis zu einer Abbruchkante (331) fließt, die teilweise die Endfläche (33) begrenzt, **dadurch gekennzeichnet, dass** sie Mittel (34, 5) zum Führen des Schmierfluids in Richtung der Abbruchkante (331) umfasst.

2. Schmiervorrichtung (3) nach Anspruch 1, wobei der Ausstoßkopf (32) eine abgeschrägte Fläche (34) aufweist, die einen Winkel mit der Endfläche (33) bildet, wobei die Führungsmittel eine an der Verbindungsstelle zwischen der Endfläche (33) und der abgeschrägten Fläche (34) gebildete Kante aufweist.

3. Schmiervorrichtung (3) nach Anspruch 1 oder 2, umfassend mindestens eine Trennwand (5), die sich vorstehend von dem Ausstoßkopf (32) erstreckt, um die Endfläche (33) zu begrenzen.

4. Schmiervorrichtung (3) nach Anspruch 3, wobei die Führungsmittel die mindestens eine Trennwand (5) umfassen.

5. Schmiervorrichtung (3) nach einem der Ansprüche 1 bis 4, umfassend eine erste (321) und eine zweite Ausstoßöffnung (322), die jeweils in einer Ausstoßrichtung (D1, D2) unterschiedlich orientiert sind und jeweils an einer jeweiligen Endfläche des Ausstoßkopfes (32) münden.

6. Schmiervorrichtung (3) nach Anspruch 5 einschließlich der Merkmale von Anspruch 3, bei der die Trennwand eine Abschirmung bildet, die konfiguriert ist, um eine gegenseitige Störung von Schmierfluidstrahlen zu verhindern oder begrenzen, die jeweils von der ersten (321) und der zweiten Ausstoßöffnung (322) kommen.

7. Schmiervorrichtung (3) nach einem der Ansprüche 1 bis 6, bei der der Ausstoßkopf (32) eine Wulst (4) zwischen der Endfläche (33) und der Umfangsfläche (31) des Körpers bildet, wobei diese Wulst konfiguriert ist, um das Fließen des Schmierfluids durch eine Kapillarwirkung auf dieser Umfangsfläche zu verhindern oder begrenzen.

8. Baugruppe, umfassend eine Kupplung (2) und eine Schmiervorrichtung (3) nach einem der Ansprüche 1 bis 7, wobei die Ausstoßöffnung (321), die die Ausstoßrichtung (D1) definiert, in Richtung eines ersten Zielbereichs der zu schmierenden Kupplung (2) orientiert ist und die Abbruchkante (331) senkrecht im Bereich von einem zweiten Zielbereich der zu schmierenden Kupplung (2) angeordnet ist.

9. Turbotriebwerk oder Hilfsantriebssystem (1) für ein Turbotriebwerk eines Flugzeugs, umfassend eine Schmiervorrichtung (3) nach einem der Ansprüche 1 bis 7 oder eine Baugruppe nach Anspruch 8.

## Claims

1. Lubrication device (3) for coupling (2), comprising a body provided at one longitudinal end with an ejection head (32) extending along a longitudinal axis (A1), the body comprising a circumferential face (31) and a main channel (311) capable of conveying a lubrication fluid to the ejection head (32), the ejection head (32) having an ejection orifice (321) arranged to eject the lubrication fluid from the main channel (311), this ejection orifice (321) defining an ejection direction (D1) and opening onto an end face (33) of the ejection head (32), the end face (33) being oriented relative to the longitudinal axis (A1) of the ejection head (32) such as to guide the lubrication fluid to flow towards the circumferential face (31) up to a stall strip (331) partly delimiting the end face (33), **characterised in that** it comprises means (34, 5) for guiding the lubrication fluid towards the stall strip (331).

2. Lubrication device (3) according to claim 1, wherein the ejection head (32) comprises a bevelled face (34) forming an angle with the end face (33), said guiding means comprising an edge formed at the junction between the end face (33) and the bevelled face (34).

3. Lubrication device (3) according to claim 1 or 2, comprising at least one partition (5) which extends from the ejection head (32) so as to delimit the end face (33).

4. Lubrication device (3) according to claim 3, wherein said guiding means comprise the at least one partition (5).

5. Lubrication device (3) according to one of claims 1 to 4, comprising first (321) and second (322) ejection orifices which are each oriented in a different ejection direction (D1, D2) and which each open onto a respective end face of the ejection head (32).

6. Lubrication device (3) according to claim 5 including the characteristics of claim 3, wherein the partition forms a screen configured to prevent or limit mutual disruption of lubrication fluid jets coming respectively from the first (321) and second (322) ejection orifices.

7. Lubrication device (3) according to one of claims 1 to 6, wherein the ejection head (32) comprises a flange (4) between the end face (33) and the circumferential face (31) of the body, this flange being configured to prevent or limit the flow of the lubrication fluid by capillary action on this circumferential face.

8. Assembly comprising a coupling (2) and a lubrication device (3) according to one of claims 1 to 7, the ejection orifice (321) defining the ejection direction (D1) being oriented towards a first target area of the coupling (2) to be lubricated and the stall strip (331) being located vertically in line with a second target area of the coupling (2) to be lubricated.

9. Turbine engine or accessory drive system (1) for an aircraft turbine engine, comprising a lubrication device (3) according to one of claims 1 to 7 or an assembly according to claim 8.
